# EUROPEAN PATENT APPLICATION

(11) **EP 4 819 468 A1**
(43) Date of publication of application: **07.10.2026**
(21) Application number: 25167423.0
(22) Date of filing: 31.03.2025
(51) Int. Cl.: H02M 1/32, H02M 3/335

(54) **DC TO DC CONVERTER WITH DISCHARGE CAPABILITES**

(71) Applicant: KraftPowercon Sweden AB, 445 56 Surte (SE)
(72) Inventor: KNUTSSON, Peter, 342 52 Vislanda (SE); SVENSSON, Kenneth, 374 41 KARLSHAMN (SE); RANSTAD, Per, 352 35 VÄXJÖ (SE)
(74) Representative: Lind Edlund Kenamets Intellectual Property AB

(57) **Abstract**

The present disclosure relates to a method for discharging an energy source (4) using a DAB converter (10), and a controller (6) configured implement said method. The method comprises controlling switches (S_{2A1}, S_{2A2}, S_{2B1}, S_{2B2}) of a second H-bridge (2) to short-circuit a transformer (3) to form a resistive load for a first H-bridge (1, 1') and to form an open circuit at a second terminal (21). The method further comprises controlling (S2) switches (S_{1A1}, S_{1A2}) of a first leg of the first H-bridge (1, 1') by opening and closing each switch (S_{1A1}, S_{1A2}) repeatedly such that one of a high side switch (S_{1A1}) and a low side switch (S_{1A2}) is closed when the other one is open, and controlling switches (S_{1B1}, S_{1B2}) of a second leg of the first H-bridge (1, 1') in an analogous manner.

## Description

### TECHNICAL FIELD OF THE INVENTION

The present invention relates to a method for discharging an energy source using a dual active bridge DC to DC converter, and a controller configured implement said method.

### BACKGROUND OF THE INVENTION

Electrical energy powers most parts of society including vehicles, heating systems and many types of consumer products such as computers and smartphones. Electrical energy is supplied from energy producers via the utility grid or from a local energy source such as a generator, photovoltaics, a battery or a fuel cell. The current and voltage characteristics of the electric energy varies depending on the type of energy source, for example, batteries and fuel cells typically output DC with a voltage which depends on the type of fuel cell, or the type of battery chemistry used as well as the state-of-charge of the battery.

In many situations, it is necessary to convert the voltage of the electricity output by an energy source to a voltage which is suitable for powering the connected electrical devices. For example, in electrical vehicles, EVs, the voltage of a high voltage battery is often converted with a DC-DC converter to a lower voltage suitable for powering low voltage devices onboard the EV, such as headlights or the infotainment system. Therefore, a voltage converter is often arranged between the energy source and the electrical load, to convert the voltage output by the energy source to a voltage suitable for the load.

Additionally, for many types of energy sources (e.g. fuel cells) special considerations must be made when the energy source is to be turned off so as to stop supplying power. While the demand for electrical energy may drop abruptly, calling for fully disconnecting the energy source from the voltage converter, the energy source may still feature a stored energy that should be dissipated to ensure safe disconnection and longevity of the energy source. Accordingly, when a fuel cell is shut down and/or to be disconnected from its load (e.g. the voltage converter) it may still be charged with remaining energy, and must be discharged.

To this end, it has been proposed that a separate discharge circuit, consisting of a switch and a resistive load, is connected to the output of the energy source when for example a voltage converter is disconnected or other electrical device connected to the energy source is to be disconnected or turned-off. This allows the power supplied to the voltage converter or other electrical to be cut off rapidly while at the same time the energy source can be discharged via the discharge circuit. By varying the resistance of the discharge circuit the discharge rate can be controlled such that e.g. the heat generated by the resistor can be dissipated.

A drawback with existing discharge solutions is however that an additional circuit (i.e. the discharge circuit) is needed, requiring its own control circuits and cooling arrangements. This requires additional space leading to larger and heavier systems that also add cost and complexity.

To this end, there is a need for a more compact and efficient discharge arrangement for discharging energy sources.

### SUMMARY OF THE INVENTION

It is a purpose of the present disclosure to provide a more compact and space efficient discharge arrangement for discharging an energy source and also a method for performing discharge of an energy source.

According to a first aspect of the invention there is provided a method for dissipating energy with a dual active bridge, DAB, converter. The DAB converter comprises a first H-bridge circuit with four switches and a second H-bridge circuit with four switches. Wherein the first H-bridge is connected to a first winding of a transformer and the second H-bridge is connected to a second winding of said transformer. The first H-bridge circuit comprises a first terminal and the second H-bridge circuit comprises a second terminal. The method comprises controlling the switches of the second H-bridge to short-circuit or disconnect the second winding of the transformer and controlling the switches of the second H-bridge to form an open circuit at the second terminal. While the switches of the second H-bridge short-circuits or disconnects the second winding of the transformer and forms an open circuit for the second terminal the method further comprises controlling switches of a first leg of the first H-bridge by opening and closing each switch of the first leg repeatedly with a switching frequency such that one of a high side switch and a low side switch of the first leg is closed when the other one of the high side switch and the low side switch is open. The method further comprises controlling switches of a second leg of the first H-bridge by opening and closing each switch of the second leg repeatedly with the switching frequency such that one of a high side switch and a low side switch of the second leg is closed when the other one of the high side switch and the low side switch is open, so as to introduce energy losses for the first H-bridge.

That is, the DAB converter is controlled to operate in an energy dissipation mode wherein the second H-bridge is operated so as to mimic a resistive load for the first H-bridge, wherein the first H-bridge, and to some extent also the second H-bridge, consumes and dissipates energy. The energy dissipation mode is different from the traditional energy transfer mode in which DAB converters usually operate. In the energy transfer mode, the DAB converter operates to convert an input voltage to an (optionally different) output voltage and in this mode it is desirable for the DAB converter to have as low losses as possible to make the energy transfer as efficient as possible. On the other hand, in the energy dissipation mode the goal is for the DAB converter to dissipate as much energy as possible while still allowing control of the energy dissipation rate. The energy transfer mode may optionally involve voltage conversion and be referred to as a voltage conversion mode. However it is understood that the DAB converter may operate in the energy transfer mode without performing voltage conversion, i.e. increasing or decreasing the voltage.

The control of the switches of each leg in the first bridge is such that at least one switch of each leg is open at all times to prevent simultaneous conduction. It is envisaged that both switches of a leg could be open for at least a fraction of a period of the switching frequency (introducing a blanking time as described below). It is understood that a switch is "open" when it is non conducting and that a switch is "closed" when it is conducting. In practice, switches cannot be toggled between their conductive and nonconducting state instantaneously meaning that even though a control signal used to control the switches rapidly changes from signaling an open state to a closed state the change of the physical state from nonconducting to conducting of the switch may occur slower. In general, the purpose is to control the switches such at least one switch in a switching leg is nonconducting at all times to avoid simultaneous conduction. To achieve this, the aforementioned blanking time could be used to ensure that there is sufficient time for switches to change from the conducting state to the nonconducting state, and vice versa, while preventing simultaneous conduction.

There are multiple benefits with the method according to the first aspect. Firstly, by dissipating energy with the DAB converter there is no need for dedicated discharge circuits requiring their own separate control and cooling arrangements. This enables the realization of more compact energy dissipation solutions. Secondly, the method can be applied on any already existing DAB converters meaning that DAB converters connected to programmable controllers can therefore be used to implement the method without any structural modification. Thirdly, since DAB converters often are equipped with cooling arrangements the same cooling arrangements can be used to dissipate the energy in the energy dissipation mode meaning that already existing cooling arrangements can be used.

In some implementations, controlling the switches of the first and second leg of the first H-bridge further comprises controlling the switches of the first and second leg of the first H-bridge to impose a blanking time for at least a fraction of at least one period of the switching frequency, wherein during the blanking time, (both) switches of the first and/or second leg of the first H-bridge are open.

By introducing a blanking time it can be ensured that the switches of the same leg are not in a conducting state at the same time.

In some implementations, the second winding of the transformer is disconnected by opening at least three switches of the second H-bridge. In such implementations it is advantageous if the blanking time is implemented for the first H-bridge such that all four switches of the first H-bridge are open (i.e. nonconducting) at the same time for at least a fraction of a period of the switching frequency. Hereby, the magnetization losses of the transformer can be utilized to dissipate energy.

In some implementations, the switches of the second leg of the first H-bridge are controlled with a phase shift with respect to the switches of the first leg of the first H-bridge. The method further comprises controlling the amount of phase shift to adjust the rate at which electrical energy is dissipated by the DAB converter.

By controlling the phase shift between the legs of the first H-bridge it is possible to control the rate at which energy is dissipated. In the energy transfer mode the phase shift between the two legs may be approximately 180 degrees, however, in the energy dissipation mode the phase is adjusted such that it is e.g. between 10 degrees and 170 degrees. By changing the phase shift the energy dissipation rate can be adjusted depending on e.g. the DAB converters cooling capabilities further making the method easy to integrate with preexisting DAB converters.

In some implementations, controlling the switches of the second H-bridge to form an open circuit that disconnects the terminal of second H-bridge comprises controlling two high side switches or two low side switches of the second H-bridge to be in the open state.

By opening the two high side switches or the two low side switches it is possible to disconnect the second terminal meaning that the two terminals of the DAB converter are not only galvanically isolated by the transformer but also disconnected from each other which may enhance safety.

In some implementations, controlling the switches of the second H-bridge to short-circuit the second winding of the transformer comprises controlling two high side switches or two low side switches to be closed to short circuit the second winding of the transformer.

Hereby short circuiting can be achieved at the same time as disconnection of the second terminal by closing two switches and opening two switches.

In some implementations, switching the state of the two high side switches with respect to the two low side switches of the second H-bridge, such that the two high side switches are closed when the two low side switches are open, and vice versa.

In this way, by alternating the role of the high side switches and low side switches the cooling arrangement of each switch can be utilized to a larger extent, allowing e.g. energy to be dissipated more rapidly.

In some implementations, the method further comprises controlling the switching frequency to adjust the rate at which electrical energy is dissipated by the DAB converter.

In the energy transfer mode the switching frequency is carefully selected to achieve efficient operation. However, in the energy dissipation mode the frequency can be adjusted (e.g. increased) to introduce additional losses, such as switching losses which enables the DAB converter to dissipate energy more rapidly.

According to a second aspect of the invention there is provided a DAB controller configured to control a DAB converter. The DAB converter comprises a first H-bridge circuit with four switches and a second H-bridge circuit with four switches. Wherein the first H-bridge circuit is connected to a first winding of a transformer and the second H-bridge is connected to a second winding of said transformer, and wherein a terminal of the first H-bridge circuit is configured to be connected to an energy source or an energy load and a terminal of the second H-bridge circuit is configured to be connected to the other one of an energy source and an energy load. Wherein the controller is configured to control the switches of the second H-bridge to short-circuit or disconnect the second winding of the transformer and control the switches of the second H-bridge to form an open circuit at the second terminal. While the switches of the second H-bridge short-circuits or disconnects the second winding of the transformer and forms an open circuit for the second terminal the controller is further configured to control switches of a first leg of the first H-bridge by opening and closing each switch of the first leg repeatedly with a switching frequency such that one of a high side switch and a low side switch of the first leg is closed when the other one of the high side switch and the low side switch is open. Additionally, the controller is configured to control switches of a second leg of the first H-bridge by opening and closing each switch of the second leg repeatedly with the switching frequency such that one of a high side switch and a low side switch of the second leg is closed when the other one of the high side switch and the low side switch is open, so as to introduce energy losses for the first H-bridge.

According to a third aspect of the invention there is provided an energy transfer system comprising a DAB converter with a first H-bridge circuit comprising four switches and a second H-bridge circuit comprising four switches. Wherein the first H-bridge circuit is connected to a first winding of a transformer and the second H-bridge is connected to a second winding of said transformer, and wherein a terminal of the first H-bridge circuit is configured to be connected to an energy source (such as a fuel cell) or an energy load and a terminal of the second H-bridge circuit is configured to be connected to an the other one of an energy source (such as a fuel cell) and an energy load. The energy transfer system further comprising a DAB controller according to the second aspect, configured to control the DAB converter.

In some implementations, the DAB converter further comprises a voltage stabilizing capacitor connected in parallel with the first terminal and/or the second terminal.

A voltage stabilizing capacitor connected in parallel with the first terminal and/or the second terminal helps stabilize the voltages the DAB converter works with, which may lead to enhanced efficiency and reliability in the energy transfer mode.

In some implementations, each switch is a MOSFET, and preferably a silicon carbide, SiC, MOSFET.

MOSFETS, and especially SiC MOSFETS are highly suitable for voltage converters and energy transfer systems. Of course, other types of switches such as GaN based switches may be used.

In some implementations, at least one DC-blocking capacitor is connected in series with the transformer, between the first winding of the transformer and the first H-bridge and/or between the second winding of the transformer and the second H-bridge.

The DC blocking capacitor(s) blocks the DC offset and may also assist in achieving soft switching (e.g. zero voltage switching) in the energy transfer mode.

In some implementations, the DAB converter is connected to an energy source. The energy source may be any type of energy source that benefits from being discharged at shutoff. For example, the energy source is a mechanical, electrical, electrochemical or thermal energy storage device such as a battery (e.g. a rechargeable battery), a fuel cell or a flywheel.

According to a fourth aspect of the invention there is provided a computer program product comprising instructions which, when the program is executed by a computer, cause the computer to carry out the method of the first aspect of the invention.

The invention according to the second, third and fourth aspect features the same or equivalent benefits as the invention according to the first aspect. Any functions described in relation to the method, may have corresponding features in a controller, system or a computer program product, and vice versa.

### BRIEF DESCRIPTION OF THE DRAWINGS

The present invention will be described in more detail with reference to the appended drawings, showing currently preferred embodiments of the invention.
Figure 1 shows a circuit diagram of a dual active bridge converter according to some implementations.
Figure 2 shows two graphs illustrating the voltage pattern at a leg of the first H-bridge compared to a leg of the second H-bridge.
Figure 3a shows two graphs illustrating the switching patterns of the switches of the first leg of the first H-bridge according to some implementations.
Figure 3b shows two graphs illustrating the switching patterns of the switches of the first leg of the first H-bridge, when a blanking time is introduced, according to some implementations.

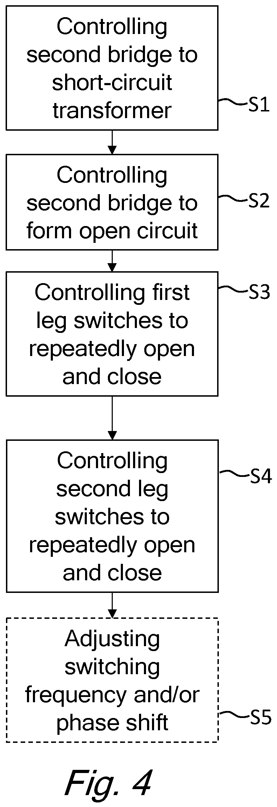

Figure 4 is a flowchart illustrating a method for dissipating energy with a DAB converter according to some implementations.
Figure 5 shows four graphs comparing the switching patterns of the switches of the two legs of the first H-bridge in the energy dissipation mode according to some implementations.
Figure 6a is a circuit diagram illustrating an equivalent circuit for the first H-bridge when the transformer is short circuited.
Figure 6b is a circuit diagram illustrating an alternative first H-bridge with a voltage stabilizing capacitor and a DC blocking capacitor.
Figure 7 is a block diagram illustrating an energy transfer system comprising the DAB converter connected between an energy source and load, and a controller.
Figure 8 is a block diagram illustrating an energy transfer system where the energy source is a fuel cell.

### DETAILED DESCRIPTION

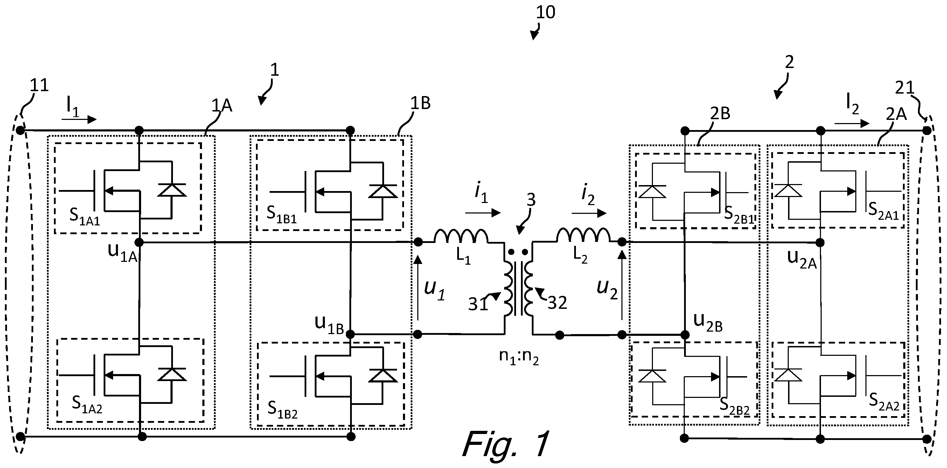

Fig. 1 is a circuit diagram of an exemplary dual active bridge, DAB, DC to DC converter 10. The DAB converter topology is as such known in the art however the high number of switches (eight in total) means there are many degrees of freedom for controlling the DAB converter 10. The DAB converter 10 is used to convert an input voltage provided to an input terminal to an output voltage (which optionally is different from the input voltage) at an output terminal and by controlling the switching pattern of the switches it is possible to steer the direction in which the power flows. The DAB converter 10 is bidirectional, meaning that power can flow in either direction.

The DAB converter 10 described herein comprises a first terminal 11 and second terminal 12 and the first terminal 11 may be input terminal and the second terminal 21 may be the output terminal, or vice versa. Additionally, the DC voltage at the first terminal 11 may be higher voltage and the DC voltage at the second terminal 21 may be lower voltage, or vice versa. It is also envisaged that the voltage at the two terminals is the same.

The DAB converter 10 comprises a first full bridge 1 and a second full bridge 2. The full bridges 1, 2 may also be referred to as H-bridges 1, 2. The first H-bridge 1 is connected to the second H-bridge 2 via a transformer 3, as is typical for DAB converters.

The first H-bridge 1 comprises four switches S_{1A1}, S_{1B1}, S_{1A2} and S_{1B2}. Switches S_{1A1} and S_{1A2} are connected in series and form a first a leg 1A, wherein S_{1A1} is referred to as a high side switch and S_{1A2} is referred to as a low side switch. Similarly, S_{1B1} and S_{1B2} are connected in series, and arranged in parallel to the first leg 1A, so as to form a second leg 1B with S_{1B1} being referred to as a high side switch and S_{1B2} being referred to as a low side switch. Accordingly, the first H-bridge 1 comprises a first leg 1A (comprising switches S_{1A1} and S_{1A2}) and a second leg 1B (comprising switches S_{1B1} and S_{1B2}). At the same time, the first H-bridge may be said to comprise a pair of high side switches (switches S_{1A1} and S_{1B1}) and a pair of low side switches (switches S_{1B1} and S_{1B2}).

The first H-bridge 1 is connected to the first terminal 11. In examples where the first terminal 11 is the input terminal, the first terminal is configured to be connected to an energy source. The voltage at the first terminal 11 may be a DC voltage. The first terminal 11 may be a single terminal configured to accept a single input voltage (e.g. relative to ground). In some implementations, the first terminal 11 comprises two sub-terminals, each configured to be connected to a DC-voltage wherein the input voltage to the first H-bridge is defined as the voltage difference between the two sub-terminals. For example, the voltage at one sub-terminal may be positive (relative ground) and the voltage at the other sub-terminal may be negative or zero (relative ground).

The switches S_{1A1}, S_{1A2}, S_{1B1}, S_{1B2} of the first H-bridge 1 may be realized with any type of electrically controlled switches. In most applications, each switch S_{1A1}, S_{1A2}, S_{1B1}, S_{1B2} is realized with a transistor such as a MOSFET transistor as shown in fig. 1. The type of transistor may be selected based on the desired operation frequency and the voltage levels involved. For example, for voltages above 500 V silicon carbide, SiC, MOSFETs are preferred since they can withstand large drain-source voltages.

The second H-bridge 2 may be structurally identical to the first H-bridge 1. The second H-bridge 2 comprises a first leg 2A with switches S_{2A1} and S_{2A2} connected in series and a second leg 2B, parallel to the first leg 2A, with switches S_{2B1} and S_{2B2} connected in series. Accordingly, the second H-bridge 2 can also be said to comprise two high side switches (i.e. switches S_{2A1} and S_{2B1}) and two low side switches (i.e. switches S_{2A2} and S_{2B2}). The second H-bridge 2 comprises a second terminal 21. In some implementations, the second terminal 21 acts as the output terminal whereby the second terminal is configured to be connected to an electrical load. As for the first terminal 11, the second terminal may be a single terminal or comprise two sub-terminals.

The two H-bridges 1, 2 are connected using a transformer 3. The transformer 3 comprises two electrical windings 31, 32 (also referred to as coils) wrapped around a common transformer core. The transformer core may e.g. be made of a metal and/or a ferromagnetic or ferrimagnetic material. The first winding 31 is connected to the first H-bridge 1 and the second winding 32 is connected to the second H-bridge 2. The first winding 31 has n₁ number of windings and the second winding 32 has n₂ number of windings and the ratio between the number of windings, n₁/n₂, determines voltage conversion ratio. For example, if n₁ = 2n₂ the voltage at the second terminal 21 will be half of the voltage at the first terminal 11. It is envisaged that in some implementations n₁ = n₂ whereby the energy transfer system does not perform voltage conversion.

The first winding 31 of the transformer 3 is arranged with one terminal connected between the two switches S_{1A1} of the first leg 1A of the first H-bridge and the other terminal of the first winding 31 is connected between the two switches S_{1B1}, S_{1B2} of the second leg 1B of the first H-bridge 1. Similarly, the second winding 32 of the transformer 3 is arranged with one terminal connected between the two switches S_{2A1}, S_{2A2} of the first leg 1A of the second H-bridge 2 and the other terminal of the second winding is connected between the two switches S_{2B1}, S_{2B2} of the second leg 2B of the second H-bridge 2.

Since the first and second windings 31, 32 of the transformer 3 are galvanically isolated, the DAB converter 10 offers galvanic isolation between the first terminal 11 and the second terminal 21.

The transformer 3 may also exhibit a series inductance (often referred to as a leakage inductance) as illustrated with inductances L₁, L₂ connected in series with the windings 31, 32 respectively. In some implementations, discrete inductors are added to contribute to the series inductances L₁, L₂ to ensure efficient operation of the DAB converter 10. That is, while series inductances L₁, L₂ are depicted as discrete components it is understood that the series inductances may be formed fully or partially by leakage inductance from the transformer 3 and/or fully or partially by discrete inductor components added to circuit.

In many implementations, the transformer is a planar transformer which is a compact transformer where the windings are arranged on PCBs having an opening through which the core can be arranged. Planar transformers are as such known in the art.

During normal operation of the DAB converter 10 the switches S_{1A1}, S_{1A2}, S_{1B1}, S_{1B2} of the first H-bridge 1 are opened and closed with a switching frequency f in a specific switching pattern. More specifically, the switches S_{1A1}, S_{1A2}, S_{1B1}, S_{1B2} of each leg 1A, 1B are opened and closed repeatedly. However, it is advantageous to ensure that two switches of the same leg 1A, 1B are not closed at the same time as this leads to simultaneous conduction and current spikes.

To this end, the switching pattern generally ensures that when one switch in a leg 1A, 1B is open the other switch of the same leg 1A, 1B is closed and vice versa. In practice, the switches S_{1A1}, S_{1A2}, S_{1B1}, S_{1B2} are not ideal switches which can be switched between a conducing (closed) state and nonconducting (open) state instantaneously. To this end, the switching pattern may incorporate a blanking time (also called a dead time) during which both switches of a same leg 1A, 1B are open to avoid simultaneous conduction, as will be described in further detail below.

Additionally, the switches S_{1A1}, S_{1A2} of the first leg 1A are controlled so as to generally be in an opposite state to the switches S_{1B1}, S_{1B2} of the second leg 1B. That is, when the high side switch S_{1A1} of the first leg 1A is closed (and the low side switch S_{1A2} of the first leg 1A is open) the high side switch S_{1B1} of the second leg 1B is open (and the low side switch S_{1B2} of the second leg 1B is closed). In other words, diagonal switch pairs are controlled in tandem with the first diagonal pair S_{1A1} and S_{1B2} being closed (or open) at substantially the same time and with the second diagonal pair S_{1A2} and S_{1B1} being closed (or open), optionally with a blanking time.

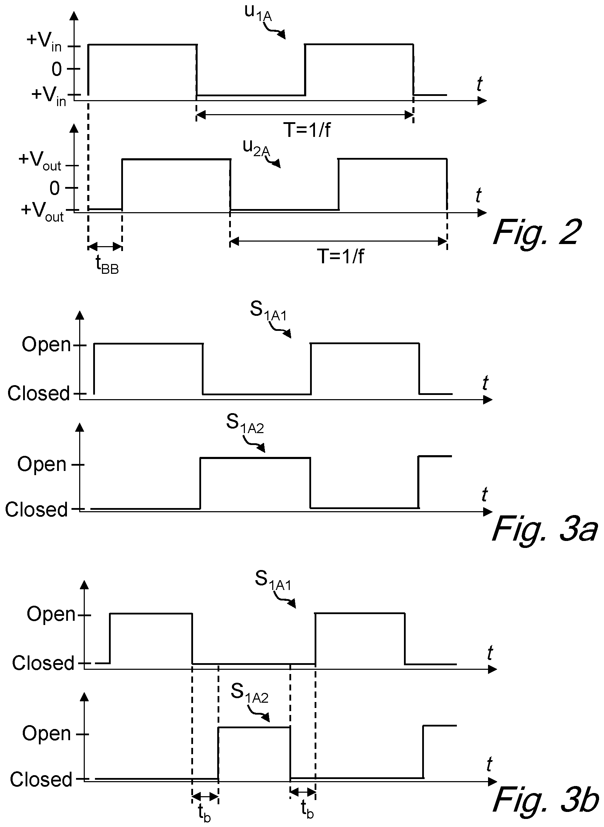

This switching pattern generates a voltage pattern and in fig. 2 the voltage u_{1A} as measured between the two switches S_{1A1}, S_{1A2} of the first leg 1A is shown schematically. As seen, the voltage u_{1A} may resemble a square wave over time *t*. The switching pattern repeats with the switching frequency *f* which is the inverse of the switching period *T.*

Assuming that the first terminal 11 is the input terminal supplied with an input voltage Vᵢₙ it holds that when switch S_{1A1} is closed, the voltage u_{1A} is equal to the input voltage Vᵢₙ at the input terminal 11. Later, when switch S_{1A1} is open and switch S_{1A2} is closed, the polarity of the voltage u_{1A} is reversed making it equal to negative input voltage -Vᵢₙ.

The switches S_{2A1}, S_{2A2}, S_{2B1}, S_{2B2} of the second H-bridge 2 are controlled essentially identical to the switches of the first H-bridge 1. The voltage u_{2A} measured between the switches S_{1B1}, S_{1B2} of the first leg 2A of the second bridge 2 is also shown schematically in fig. 2.

However, there is a bridge-to-bridge phase shift α wherein the switching pattern of the switches of the second H-bridge 2 are phase shifted with respect to switching pattern of the first H-bridge 1. Power will flow through the DAB converter 10 in the direction of leading bridge to trailing bridge. That is, in the example shown where the second H-bridge 2 lags behind the first H-bridge 1 with a non-zero bridge-to-bridge phase shift α the power flows in a direction from the first terminal 11 of the first H-bridge 1 to the second terminal 21 of the second H-bridge 2. By controlling the bridge-to-bridge phase shift α it is possible to reverse the direction of power flow and/or control the amount of power flowing through the DAB converter 10.

Fig. 3a and 3b illustrate exemplary switching patterns for the switches S_{1A1} and S_{1A2} of the first leg 1A. In fig. 3a there is no blanking time and the low side switch S_{1A2} is opened at the very instant the high side switch S_{1A1} is closed. Since switches generally cannot be opened or closed instantaneously, this switching pattern runs the risk of introducing simultaneous conduction which is disadvantageous for the efficiency. In fig. 3b a blanking time t_{b} has been introduced whereby the high side switch S_{1A1} is closed some time before the low side switch S_{1A2} is opened, thereby introducing a blanking time t_{b} during which none of the switches S_{1A1} and S_{1A2} are closed (i.e. conducting) to avoid simultaneous conduction. A similar blanking time t_{b} is introduced for the switches of the second leg 1B of the first H-bridge and also for the switches of the two legs 2A, 2B of the second H-bridge 2.

The blanking time t_{b} is introduced in one or more (or all) periods of the switching pattern. For example, the blanking time occupies less than 10%, less than 5%, less than 3%, or even less than 2% of the switching period.

The description above generally describes how the DAB converter 10 operates in a normal mode (i.e. the energy transfer mode).

With reference to fig. 1, and the flowchart in fig. 3, a method for controlling the DAB converter 10 to operate in an energy dissipation mode instead of the energy transfer mode will now be described. Without loss of generality it is assumed that an energy source is connected to the first terminal 11 and energy supplied by the energy source is to be dissipated, as e.g. is useful for some types of energy sources during shutdown. The second terminal 21 may be connected to an energy load.

At step S1 the switches of the second H-bridge 2 of the DAB 10 are controlled so as to short circuit or disconnect the second winding 32 of the transformer 3.

Short-circuiting of the second winding 32 may be accomplished by closing the high side switches S_{2B1}, S_{2A1} or by closing the low side switches S_{2B2}, S_{2A2}. Regardless of whether the high side switches S_{2B1}, S_{2A1} or the low side switches S_{2B2} or S_{2A2} are closed, the two terminals of the second winding 32 of the transformer 3 will be connected together, causing a short circuit. Short circuiting the second winding 32 will introduce a load for the first H-bridge 1 which is at least partially resistive. The load experienced by the first H-bridge 1 may further be partly reactive.

Alternatively, to disconnect the second winding 32 at least three switches of the second H-bridge 2 are opened whereby the second winding 32 is part of an open circuit. Disconnection of the H-bridge 2 in this manner is advantageous combined with a blanking time in the first H-bridge 1 wherein during the blanking time (which is at least a fraction of at least one switching period) none of the switches of the first bridge are closed. This control scheme allows the magnetization losses of the transformer 3 to be utilized to dissipate energy.

The method then goes to step S2 comprising forming an open circuit at the second terminal 21. By forming an opening circuit at the second terminal 21 any electric load connected to the second terminal is disconnected. To form an open circuit, the high side switches S_{2B1}, S_{2A1} or low side switches S_{2B2}, S_{2A2} of the second H-bridge 2 are opened. Since either the high side switches S_{2B1}, S_{2A1} or the low side switches S_{2B2}, S_{2A2} are closed to accomplish the short circuiting at step S1 it is understood that a different pair of switches are opened at step S2 to form the open circuit at the second terminal 21. For example, the high side switches S_{2B1}, S_{2A1} are closed to accomplish short circuiting of the second winding 32 of the transformer 3 and the low side switches S_{2B2}, S_{2A2} are open to form an open circuit at the second terminal 21.

Additionally, while step S2 is depicted as occurring after step S1 it is understood that the order may be reversed, or that steps S1 and S2 occur at substantially the same time.

While the second winding 32 of the transformer 3 is short circuited and the second terminal 21 is disconnected by the open circuit, the method continues to step S3 involving controlling the switches S_{1A1} and S_{1A2} of the first leg 1A of the first H-bridge 1 by opening and closing each switch of the first leg repeatedly with a switching frequency. The opening and closing is performed such that one of the high side switch, S_{1A1} and low side switch S_{1A2} of the first leg 1A is closed when the other one of the high side switch S_{1A1} and low side switch S_{1A2} is open. Accordingly, at least one of the switches S_{1A1}, S_{1A2} of the first bridge 1A are closed at all times to prevent simultaneous conduction. Optionally, a blanking time is used such that both switches S_{1A1}, S_{1A2} of the first leg 1A are open during the blanking time which occupies at least a fraction of a period of the switching frequency.

The method then continues to step S4 involving controlling the switches S_{1B1}, S_{1B2} of the second leg 1B of the first H-bridge 1 in generally the same way as the switches S_{1A1}, S_{1A2} of the first leg 1A. There may however be a leg-to-leg phase shift between the control of the first and second leg 1A, 1B of the first H-bridge 1. Accordingly, step S4 may involve controlling the switches S_{1B1} and S_{1B2} of the second leg 1B of the first H-bridge 1 by opening and closing each switch of the second leg 1B repeatedly with the switching frequency. The opening and closing is performed such that one of the high side switch, S_{1B1} and low side switch S_{1B2} of the second leg 1B is closed when the other one of the high side switch S_{1B1} and low side switch S_{1B2} is open. Accordingly, at least one of the switches S_{1B1}, S_{1B2} of the second bridge 1B is closed at all times to prevent simultaneous conduction. Optionally, a blanking time is used such that both switches S_{1B1}, S_{1B2} of the second leg 1B are closed during the blanking time which occupies a fraction of a period of the switching frequency.

Steps S3 and S4 may occur at the same time. That is, while the second winding 32 of the transformer 3 is short circuited, and the second terminal disconnected by the open circuit, the switches of the first H-bridge 1 may operate in manner similar to, or even identical to, their operation when the DAB converter 10 is used in the energy transfer mode. However, since the second winding 32 of the transformer 3 is short circuited and the second terminal 21 is disconnected, the DAB converter 10 no longer operates as a voltage converter and only serves to dissipate energy.

In the energy dissipation mode, energy is dissipated in the switches S_{1A1}, S_{1A2}, S_{1B1}, S_{1B2} of the first H-bridge 1, in the form of switching losses and conductive losses, and also in the transformer 3. Other resistive losses may also be present.

To this end, if the switches S_{1A1}, S_{1A2}, S_{1B1}, S_{1B2} of the first H-bridge 1 continues to open and close as described above, and the second winding 32 of transformer 3 is short-circuited the DAB converter 10 will dissipate energy.

Some energy will also be dissipated in the second H-bridge 2. Even though the second winding 32 is short-circuited, a voltage will still be generated over the second winding 32 which drives a current through the closed pair of switches in the second H-bridge 2 (i.e. either the high side switch pair or the low side switch pair). This will lead to conductive losses in the switches of the second H-bridge 2 as well as losses in the second winding 32 of the transformer 3.

The dissipated energy is emitted in the form of heat generated by the transformer 3 and switches. The heat is in turn dissipated by cooling arrangements thermally connected to the transformer 3 and switches.

In some applications, it may be desirable to control the rate at which energy is dissipated, e.g. so as to increase the rate at which energy is dissipated. Since the switching losses depend on the switching frequency f it may be desirable to increase the switching frequency f of the switches in the first H-bridge 1. Therefore, the method may comprise step S5 involving e.g. adjusting the switching frequency f of the first H-bridge 1 so as to increase the energy losses. For example, in the energy transfer mode the switching frequency *f = f*_{*s*1} and in the energy dissipation mode the switching frequency is increased to f *= f*_{*s*2} wherein *f*_{*s*2} *> f*_{*s*1}*.* For example, *f*_{*s*2} is at least 5% higher, at least 10% higher, at least 20% higher or at least 50% higher than *f*_{*s*1}*.*

The losses in the transformer 3 depend on the magnetization and by decreasing the frequency the magnetization increases. The losses in the transformer 3 may be proportional to the magnetization whereby it is possible to control to what extent the losses occur in the first H-bridge 1 and in the transformer 3 by e.g. controlling the switching frequency *f*.

In some implementations, to ensure sufficiently high energy dissipation even for low voltages, an increase in switching frequency f is implemented in the energy dissipation mode, bringing losses primarily in the first H-bridge.

It is noted that in the energy transfer mode an as high energy efficiency as possible is desired. To achieve this, the switching frequency *f*_{*s*1} and the switching pattern of the switches (e.g. in terms of how much blanking time that is used) is carefully tuned to optimize the efficiency of the switches and the transformer. For example, zero voltage switching (ZVS) is often desired and simultaneous conduction through two switches in the same leg 1A, 1B is avoided to avoid current spikes that could increase conducive losses. In the energy dissipation mode, however, the DAB converter 10 is operated so as to deliberately increase the losses in the system to act as a resistive load that discharges the energy source.

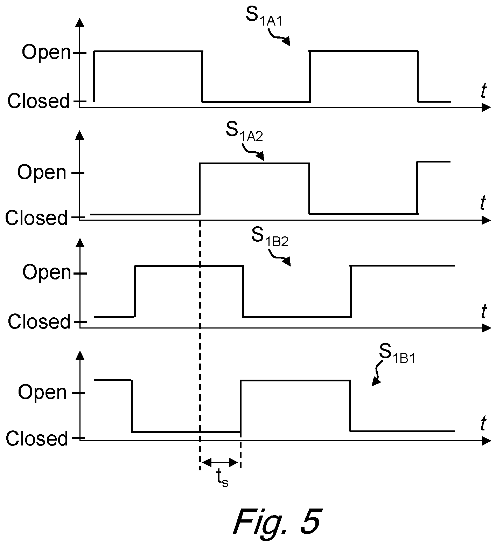

Additionally or alternatively to adjusting the switching frequency, step S5 may involve introducing a non-zero phase shift between the two legs 1A, 1B of the first H-bridge 1 with respect to the energy transfer mode. With further reference to fig. 5 a control scheme for the switches of the first H-bridge in the energy dissipation mode implementing a leg-to-leg phase shift is exemplified. The top two graphs illustrate the state of the switch S_{1A1} and the switch S_{1A2} as a function of time.

In the energy transfer mode, the state of the switch S_{1B2} may be time-aligned with the state of the switch S_{1A1} and the state of switch S_{1B1} may be time-aligned with the state of switch S1A2. Accordingly, in the energy transfer mode the two legs 1A, 1B operate with approximately a 180 degree phase shift. However, in the energy dissipation mode according to some implementations the control scheme for the switches of the second leg 1B may be phase shifted with a phase shift tₛ relative to the control scheme of the first leg 1A as illustrated using the bottom two graphs of fig. 5. and the graph SB illustrates the state of the switch S_{1A2} and the switch S_{1B1} over time according to some implementations. While fig. 5 shows the phase shift tₛ introduced for the second leg 1B it is understood that the phase shift tₛ may be introduced for the first leg 1A or that a different phase shift is applied for each leg.

The phase shift tₛ introduced in the energy dissipation mode may be configured such that the legs 1A, 1B operate with a phase shift in the range of 5 - 175 degrees, in the range of 10 - 170 degrees or in the range of 20 - 160 degrees. For example, the phase shift tₛ may introduce result in both switch S_{1A1} and switch S_{1B1} being closed at the same time (e.g. for a fraction of a period) which typically never occurs in the energy transfer mode.

In the second H-bridge 2 the two high side switches, S_{2B1} and S_{2A1}, or the two low side switches, S_{2B2} and S_{2A2}, are closed to short-circuit the second winding 32 of the transformer 3. The selection of whether to close the high side switches S_{2B1}, S_{2A1} or the low side switches S_{2B2}, S_{2A2} is arbitrary, and in principle it does not matter which pair is closed so as to short circuit the second winding of the transformer 3. Regardless of which pair is used to short circuit the second winding 32 the remaining pair can be opened to form an open circuit at the second terminal 21.

That is, one of (A) the high side switches S_{2B1}, S_{2A1} and (B) the low side switches S_{2B2}, S_{2A2} are therefore not used to short circuit the second winding 32 of the transformer. These switches (A or B) are opened to disconnect the output terminal 21 and any electrical load connected to the output terminal 21.

In some implementations, the high side switches S_{2B1}, S_{2A1} or low side switches S_{2B2}, S_{2A2} of the second H-bridge 2 are kept closed (and other switches open) during the energy dissipation process. Notably, the high side switches S_{2B1}, S_{2A1} or low side switches S_{2B2}, S_{2A2} are kept closed for multiple periods T of the first H-bridge 1, such as for at least 10 periods, at least 100 periods or at least 1000 periods.

Hereby, the high and low side switches of the second H-bridge 2 are, according to some implementations, kept statically in an open and/or closed state during the energy dissipation process. For example, the high side switches S_{2B1}, S_{2A1} are closed to achieve short circuiting and the low side switches S_{2B1}, S_{2A1} are kept open to achieve load disconnection, or vice versa.

In some implementations, the role of the high side switches S_{2B1}, S_{2A1} and low side switches S_{2B1}, S_{2A1} is alternated when the DAB converter 10 operates in the energy dissipation mode. For example, if the high side switches S_{2B1}, S_{2A1} are closed at a time t₁ and the low side switches S_{2B2}, S_{2A2} are open at time t₁ the roles may be reversed at a time t₂ which is later than time t₁. While the currents flowing in the second H-bridge 2, as well as the amount of dissipated power by the second H-bridge 2, will be smaller compared to that of the first H-bridge 1 during the energy dissipation mode there may still be a benefit in alternating which switch pair in the second H-bridge 2 that is responsible for the short-circuiting and the associated conduction losses. Since some current will flow through the closed switch pair some amount of heat will be developed and dissipated by the cooling arrangements coupled to each switch of the closed switch pair. If the higher and lower switch pairs are alternating between the closed state, the cooling arrangements of all switches can be utilized periodically allowing more of the cooling capacity of the second H-bridge 2 to be utilized.

The open switch pair may also be alternated so as to complement the alternating closed pair. This ensures that the second terminal 21 is disconnected at all times. In some implementations, it is prioritized that the second terminal 21 is disconnected at all times while switching the roles of the high and low side switch pairs in the second H-bridge 2. To accomplish this the control of the switches of the second H-bridge may be such that all switches of the second H-bridge are open for a period of time between alternating the roles of the high side and low side switches of the second H-bridge.

The repetition frequency with which the roles of the high and low side switches in the second H-bridge 2 alternates may be equal to the switching frequency f of the first H-bridge 1. However, the repetition frequency with which the roles of the high and low side switches in the second H-bridge 2 alternates may also be higher or lower than the switching frequency f of the first H-bridge 1. For example, by increasing the repetition frequency the switching losses of the second H-bridge 2 may become more pronounced, allowing more power to be dissipated by the second H-bridge 2.

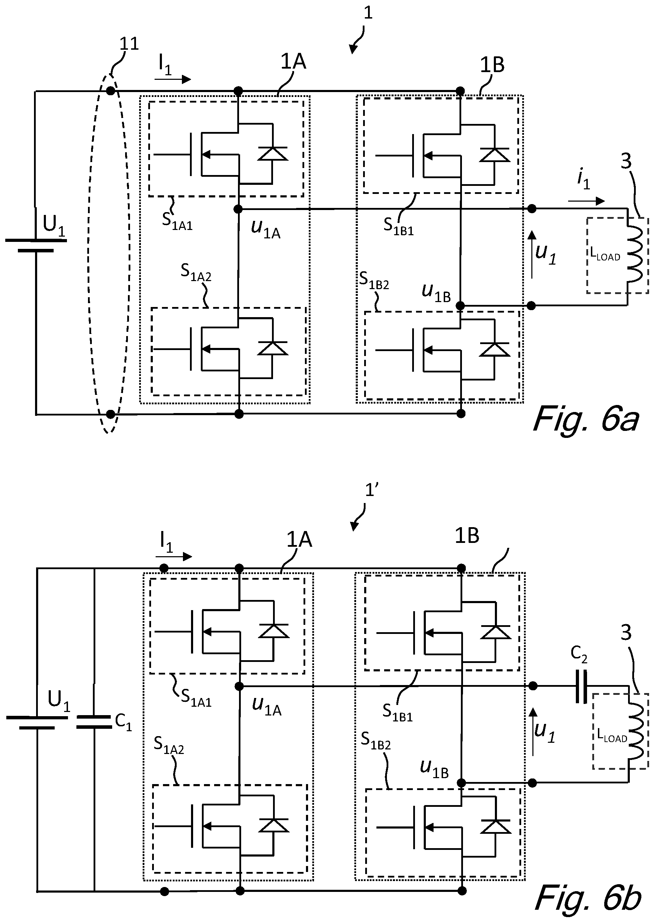

Fig. 6a shows schematically the first H-bridge 1 as it appears when the second winding of the transformer 3 is short circuited in the energy dissipation mode. From the perspective of the first H-bridge 1, the transformer 3 now appears as an essentially inductive load L_{load} which also will exhibit a resistive impedance. As the switches S_{1A1}, S_{1A2}, S_{1B1}, S_{1B2} of the first H-bridge 1 are opened and closed repeatedly, the energy dissipated by the first H-bridge 1 will mainly be due to conductive losses, switch losses and resistive losses in the inductor L_{load} (the transformer 3).

Fig. 6b shows an alternative first H-bridge 1' that may be used in some implementations. The alternative first H-bridge 1' comprises a voltage stabilizing capacitor C₁ which is used in some implementations to stabilize the voltage at the first terminal 11 to the alternative first H-bridge 1'.

The alternative first H-bridge 1' further comprises a DC-blocking capacitor C₂ connected in series with the transformer 3. The DC blocking capacitor blocks the DC component of reaching the transformer 3. The DC-blocking capacitor C₂ is optional, and it is also envisaged that the DC blocking capacitor C₂ can be placed on either the high side or the low side of the transformer 3.

Similarly, a voltage stabilizing capacitor and/or DC blocking capacitor may be provided in the second H-bridge in an analogous manner as for the alternative first H-bridge 1'.

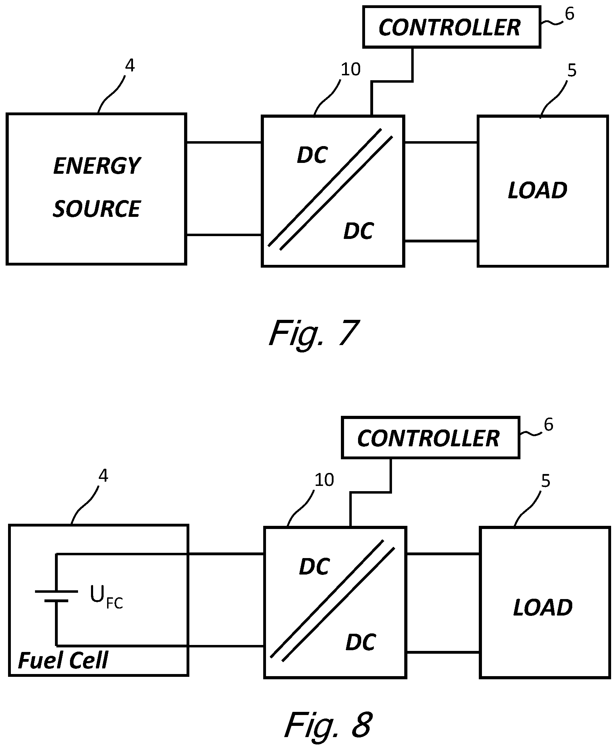

Fig. 7 is a block diagram illustrating an energy transfer system connected between an energy source 4 and a load 5. The energy source 4 is a DC energy source (e.g. a battery or a fuel cell) and the load 5 is a DC load, e.g. the DC load is an apparatus powered by DC voltage or a DC bus (e.g. in a building or onboard a vehicle such as a car, boat or airplane) which in turn is connected to one or more DC loads.

The energy transfer system comprises a DAB converter 10 and a controller 6 configured to control the switches of the DAB converter 10 in accordance with the methods described above.

In some implementations, the DAB controller 6 is configured to control the DAB converter 10 to operate in either the energy transfer mode or in the energy dissipation mode. During normal operation, the DAB controller 6 is configured to control the DAB converter 10 in energy transfer mode. In the energy transfer mode the DAB converter transfers power from the energy source 4 to the load 5 or alternatively transfers power to the energy source 4 in cases where the load 5 also can act as a generator to recharge the energy source 5 (which may e.g. be a rechargeable battery).

When the load 5 is disconnected and/or a control signal indicating that the load 5 is to be disconnected is received by the DAB controller 6, the DAB controller 6 controls the switches of the DAB converter 10 to start operating in the energy dissipation mode whereby the DAB converter 10 starts dissipating power and also disconnects the load 5 as described above. Accordingly, the DAB converter 10 can rapidly disconnect the load 5 and, while the load 5 is disconnected, the DAB converter 10 serves to discharge the energy source 4 as needed.

There are many types of energy sources that benefit from being fully or partially drained of electrical energy after the load 5 has been disconnected. One example of such an energy source is a fuel cell, and turning to fig. 8 a DAB converter 10 is shown connected to a fuel cell acting as the energy source 4.

Even though the fuel supply of the fuel cell is cutoff rapidly the fuel cell will still exhibit a voltage at its output terminal and is capable of supplying power. The fuel cell is in fig. 8 modelled as a voltage source U_{FC}, however, contrary to an ideal voltage source the fuel cell will continue to act as a voltage source even when the fuel supply is cutoff. For safety reasons and for ensuring the longevity of certain types of fuel cells it is therefore advantageous to discharge fuel cell even after fuel supply is cutoff, which hereby may be accomplished using the DAB converter 10 operating in the energy dissipation mode described above.

Accordingly, with the method and energy transfer system described herein the same DAB converter 10 can be used to both operate in the energy transfer mode and energy dissipation mode. By utilization of the control methods described herein, no additional circuits (such as dedicated discharge circuits) are required and the heat dissipation system of the DAB converter 10 used in the energy transfer mode is used again to dissipate energy in the energy dissipation mode. Additionally, by controlling e.g. the switching frequency of the first H-bridge (or other control parameters such as the rate of switching the roles of the high and low side switch pairs of the second H-bridge) the rate at which energy is dissipated can be controlled, e.g. to keep it within the limits of the heat dissipation arrangement of the DAB converter 10.

The person skilled in the art realizes that the present invention by no means is limited to the preferred embodiments described above. On the contrary, many modifications and variations are possible within the scope of the appended claims.

The above-discussed and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A method for dissipating energy with a dual active bridge, DAB, converter (10), the DAB converter (10) comprising:
a first H-bridge circuit (1, 1') with four switches (S_{1A1}, S_{1A2}, S_{1B1}, S_{1B2}) and a second H-bridge circuit (2) with four switches (S_{2A1}, S_{2A2}, S_{2B1}, S_{2B2}), wherein the first H-bridge (1) is connected to a first winding (31) of a transformer (3) and the second H-bridge (2) is connected to a second winding (32) of said transformer (3), and wherein the first H-bridge circuit (1, 1') comprises a first terminal (11) and the second H-bridge circuit (2) comprises a second terminal (21),
the method comprising:
controlling (S1) the switches (S_{2A1}, S_{2A2}, S_{2B1}, S_{2B2}) of the second H-bridge (2) to short-circuit or disconnect the second winding (32) of the transformer (3);
controlling (S2) the switches (S_{2A1}, S_{2A2}, S_{2B1}, S_{2B2}) of the second H-bridge (2) to form an open circuit at the second terminal (21);
while the switches (S_{2A1}, S_{2A2}, S_{2B1}, S_{2B2}) of the second H-bridge (2) short-circuits or disconnects the second winding (32) of the transformer (3) and forms an open circuit for the second terminal (21):
- controlling (S3) switches (S_{1A1}, S_{1A2}) of a first leg (1A) of the first H-bridge (1, 1') by opening and closing each switch (S_{1A1}, S_{1A2}) of the first leg (1A) repeatedly with a switching frequency such that one of a high side switch (S_{1A1}) and a low side switch (S_{1A2}) of the first leg (1A) is closed when the other one of the high side switch (S_{1A1}) and the low side switch (S_{1A2}) is open; and
- controlling (S4) switches (S_{1B1}, S_{1B2}) of a second leg (1B) of the first H-bridge (1, 1') by opening and closing each switch (S_{1B1}, S_{1B2}) of the second leg (1B) repeatedly with the switching frequency such that one of a high side switch (S_{1B1}) and a low side switch (S_{1B2}) of the second leg (2B) is closed when the other one of the high side switch (S_{1B1}) and the low side switch (S_{1B2}) is open, so as to introduce energy losses for the first H-bridge (1, 1').

2. The method according to claim 1, wherein controlling (S3, S4) the switches of the first and second leg (1A, 1B) of the first H-bridge (1, 1') further comprises:
controlling the switches of the first and second leg (1A, 1B) of the first H-bridge (1, 1') to impose a blanking time for at least a fraction of a period of the switching frequency, wherein during the blanking time, the switches of the first and/or second leg (1A, 1B) of the first H-bridge (1, 1') are open.

3. The method according to claim 1 or claim 2, wherein the switches (S_{1B1}, S_{1B2}) of the second leg (1B) of the first H-bridge (1, 1') are controlled with a phase shift with respect to the switches (S_{1A1}, S_{1A2}) of the first leg (1A) of the first H-bridge (1, 1') and the method further comprises:
controlling (S5) the amount of phase shift to adjust the rate at which electrical energy is dissipated by the DAB converter (10).

4. The method according to any of the preceding claims, wherein controlling the switches (S_{2A1}, S_{2A2}, S_{2B1}, S_{2B2}) of the second H-bridge (2) to form an open circuit that disconnects the terminal (21) of second H-bridge comprises controlling two high side switches (S_{2A1}, S_{2B1}) or two low side switches (S_{2A2}, S_{2B2}) of the second H-bridge (2) to be in the open state.

5. The method according to any of the preceding claims, wherein controlling the switches (S_{2A1}, S_{2A2}, S_{2B1}, S_{2B2}) of the second H-bridge (2) to short-circuit the second winding (32) of the transformer (3) comprises controlling two high side switches (S_{2A1}, S_{2B1}) or two low side switches (S_{2A2}, S_{2B2}) to be closed to short circuit the second winding (32) of the transformer (3).

6. The method according to claim 6, when depending on claim 5, further comprising:
switching the state of the two high side switches (S_{2A1}, S_{2B1}) with respect to the two low side switches (S_{2A2}, S_{2B2}) of the second H-bridge (2), such that the two high side switches (S_{2A1}, S_{2B1}) are closed when the two low side switches are open (S_{2A2}, S_{2B2}), and vice versa.

7. The method according to any of the preceding claims, further comprising:
controlling (S5) the switching frequency to adjust the rate at which electrical energy is dissipated by the DAB converter (10).

8. The method according to claim 2, further comprising:
controlling (S1) the switches (S_{2A1}, S_{2A2}, S_{2B1}, S_{2B2}) of the second H-bridge (2) to disconnect the second winding (32) of the transformer (3) by opening at least three switches of the second H-bridge.

9. A DAB controller (6) configured to control a DAB converter (10),
a first H-bridge circuit (1, 1') with four switches (S_{1A1}, S_{1A2}, S_{1B1}, S_{1B2}) and a second H-bridge circuit (2) with four switches (S_{2A1}, S_{2A2}, S_{2B1}, S_{2B2}), wherein the first H-bridge circuit (1) is connected to a first winding (31) of a transformer (3) and the second H-bridge (2) is connected to a second winding (32) of said transformer (3), and wherein a terminal (11) of the first H-bridge circuit (1, 1') is configured to be connected to an energy source (4) or an energy load (5) and a terminal (21) of the second H-bridge circuit (2) is configured to be connected to the other one of an energy source (4) and an energy load (5),
the controller being configured to:
control the switches (S_{2A1}, S_{2A2}, S_{2B1}, S_{2B2}) of the second H-bridge (2) to short-circuit or disconnect the second winding (32) of the transformer (3)
control the switches (S_{2A1}, S_{2A2}, S_{2B1}, S_{2B2}) of the second H-bridge (2) to form an open circuit at the second terminal (21), and
while the switches (S_{2A1}, S_{2A2}, S_{2B1}, S_{2B2}) of the second H-bridge (2) short-circuits or disconnects the second winding (32) of the transformer (3) and forms an open circuit for the second terminal (21):
- control switches (S_{1A1}, S_{1A2}) of a first leg (1A) of the first H-bridge (1, 1') by opening and closing each switch (S_{1A1}, S_{1A2}) of the first leg (1A) repeatedly with a switching frequency such that one of a high side switch (S_{1A1}) and a low side switch (S_{1A2}) of the first leg (1A) is closed when the other one of the high side switch (S_{1A1}) and the low side switch (S_{1A2}) is open; and
- control switches (S_{1B1}, S_{1B2}) of a second leg (1B) of the first H-bridge (1, 1') by opening and closing each switch (S_{1B1}, S_{1B2}) of the second leg (1B) repeatedly with the switching frequency such that one of a high side switch (S_{1B1}) and a low side switch (S_{1B2}) of the second leg (1B) is closed when the other one of the high side switch (S_{1B1}) and the low side switch (S_{1B2}) is open, so as to introduce energy losses for the first H-bridge..

10. An energy transfer system comprising:
a DAB converter (10) with a first H-bridge circuit (1, 1') comprising four switches (S_{1A1}, S_{1A2}, S_{1B1}, S_{1B2}) and a second H-bridge circuit (2) comprising four switches (S_{2A1}, S_{2A2}, S_{2B1}, S_{2B2}), wherein the first H-bridge circuit (1) is connected to a first winding (31) of a transformer (3) and the second H-bridge (2) is connected to a second winding (32) of said transformer (3), and wherein a terminal (11) of the first H-bridge circuit (1, 1') is configured to be connected to an energy source (4) or an energy load (5) and a terminal (21) of the second H-bridge circuit (2) is configured to be connected to an the other one of an energy source (4) and an energy load (5), and
a DAB controller (6) according to claim 9, configured to control the DAB converter (10).

11. The energy transfer system according to claim 10, wherein the DAB converter (10) further comprises a voltage stabilizing capacitor (C₁) connected in parallel with the first terminal (11) and/or the second terminal (21).

12. The energy transfer system according to claim 10 or claim 11, wherein each switch (S_{1A1}, S_{1A2}, S_{1B1}, S_{1B2}, S_{2A1}, S_{2A2}, S_{2B1}, S_{2B2}) is a MOSFET, and preferably a silicon carbide, SiC, MOSFET.

13. The energy transfer system according to any of claims 10 - 12, wherein at least one DC-blocking capacitor (C₂) is connected in series with the transformer (3), between the first winding (31) of the transformer (3) and the first H-bridge (1') and/or between the second winding (32) of the transformer (3) and the second H-bridge (2).

14. The energy transfer system according to any of claims 10 - 13, wherein the DAB converter (10) is connected to an energy source (4).

15. The energy transfer system according to claim 14, wherein the energy source (4) is a fuel cell.
